# EUROPÄISCHE PATENTSCHRIFT

(11) **EP 1 016 498 B1**
(45) Veröffentlichungstag und Bekanntmachung des Hinweises auf die Patenterteilung: **23.06.2004**
(21) Anmeldenummer: 99124906.1
(22) Anmeldetag: 14.12.1999
(51) Int. Cl.: B23Q 16/08, B23Q 16/02, B23H 7/26

(54) **Kupplungsvorrichtung mit 2 Kupplungsteilen und einer Spanneinrichtung**
Coupling device having two coupling parts and a clamping device
Dispositif d'accouplement avec deux parties d'accouplement, et un dispositif de serrage.

(30) Priorität: 16.12.1998 DE 19858159
(43) Veröffentlichungstag der Anmeldung: 05.07.2000
(73) Patentinhaber: System 3R International AB, 162 50 Vällingby (SE)
(72) Erfinder: Nordquist, Hakon, 18775 Täby (SE); Holm, Dan, 13550 Tyresö (SE); Hellman, Hans, 14135 Huddinge (SE); Fröberg, Peter, 17134 Solna (SE)
(74) Vertreter: Zinngrebe, Horst, Dr.rer.nat.

(56) Entgegenhaltungen:
- EP-A- 0 694 364
- EP-A- 0 722 809
- EP-A- 0 818 270

## Beschreibung

Die Erfindung betrifft eine Kupplungsvorrichtung mit zwei Kupplungsteilen und Spannmitteln zum lösbaren axialen Zusammenspannen der beiden Kupplungsteile, wobei an den beiden Kupplungsorganen Mittel vorgesehen sind, die den axialen Abstand beider Kupplungsorgane voneinander beim Zusammenspannen definieren und wobei als Referenz in einer zur Spannrichtung senkrechten Ebene in die Oberfläche eines der beiden Kupplungsteile mehrere in Umfangsrichtung beabstandete nichtparallele Nuten eingebracht sind und aus der Oberfläche des anderen Kupplungsteils mehrere Zapfen in den Nuten entsprechender Anordnung vorstehen, wobei wenigstens eine der Seitenflächen jedes Zapfens mit der zugeordneten Flanke jeder Nut bei axialer Ausrichtung der Kupplungsteile einen Winkel einschließt.

Wenn das eine Kupplungsteil mit dem Kopf einer Werkzeugmaschine, beispielsweise einer Erodiermaschine verbunden ist und das andere Kupplungsteil ein Werkstück trägt, läßt sich das Werkzeug an der Maschine mit außerordentlich hoher Genauigkeit in einer zur Spannrichtung (z-Richtung) senkrechten Ebene (x-y-Ebene) positionieren, wobei die Lageabweichungen auch nach einer sehr großen Zahl von Spann- und Lösevorgängen nicht mehr als nur wenige µm betragen. Bei einer Kupplungsvorrichtung nach EP-A-722 809 wird dies dadurch erreicht, daß beim Spannen auf das mit den Zapfen versehene Kupplungsteil eine in Umfangsrichtung wirkende Kraft einwirkt, welche jede Referenzfläche gegen die zugehörige Flanke preßt.

Dieser Kraft, die die hohe Wiederholgenauigkeit der Werkstück-Positionierung innerhalb der erwähnten engen Toleranz gewährleistet, kann eine durch den Bearbeitungsprozeß am Werkstück erzeugte Gegenkraft, beispielsweise bei tiefen Einstichen in das Werkstück auf einer Drehbank, entgegenwirken, die die Wiederholgenauigkeit demzufolge beeinträchtigen kann.

Aus der EP-A-818270 ist eine Anspannvorrichtung sowie Einrichtung zum positionsdefinierten Aufspannen eines Werkzeugs oder Werkstücks bekannt, welche ein dem zu spannenden Werkzeug beziehungsweise Werkstück zugewandtes Kupplungselement sowie ein ortsfest anzuordnendes Spannelement aufweist. Das Kupplungselement ist mit Nuten versehen, die zur Feinzentrierung und zur Bestimmung der Lage in der x- und/oder y-Richtung mit am Spannelement angeordneten Zentrierzapfen zusammenzuwirken bestimmt sind. Zu den Feinzentrierteilen gehört eine-jede Nute axialelastisch überspannende Brücke, in welche jeweils einer der Zentrierzapfen zur Ausrichtung eingreifen kann. Eine entsprechende Brücke ist aus der UK-A-1094067 bekannt, die eine Kupplungseinrichtung zwischen einem Revolverdrehkopf und einer Drehmaschine beschreibt.

Der Erfindung liegt daher die Aufgabe zugrunde, Maßnahmen vorzusehen, die die Wiederholgenauigkeit der Positionierung des einen Kupplungsteils relativ zum anderen Kupplungsteil unter hoher Belastung eines der Kupplungsteile in Umfangsrichtung verbessern.

Dazu ist bei der eingangs genannten Kupplungsvorrichtung vorgesehen, daß beim Zusammenspannen zwischen der Seitenfläche und der zugeordneten Flanke ein freies Ende einer mit einem der Kupplungsteile axialelastisch verbundenen Klemmplatte angeordnet ist. Bei der dem Spannen vorhergehenden Ausrichtung der Kupplungsteile in der x-y-Ebene zueinander klemmt sich die Klemmplatte zwischen der Flanke und der Seitenfläche axialelastisch ein, sichert damit die Ausrichtung und kann selbst bei extremer Belastung des Kupplungsteils in Umfangsrichtung dieser nicht nachgeben. Die erfindungsgemäße Kupplungsvorrichtung besitzt daher nicht nur eine ausgezeichnete Wiederholbarkeit der Positionierung der Kupplungsteile zueinander sondern zeigt nach dem Spannen eine außerordentliche Steifheit der Justierung, die lediglich durch die Kompressibilität des Werkstoffes der Klemmplatte bestimmt ist.

Zweckmäßig ist die Klemmplatte mit dem Kupplungsteil fest verbunden und ist insbesondere mit diesem einteilig. Vorteilhafterweise weist die Klemmplatte einen ersten, sich parallel zur achsparallelen Seitenfläche oder achsparallelen Flanke erstreckenden Abschnitt sowie einen zweiten, mit dem Kupplungsteil verbundenen, axialelastischen Abschnitt auf. Vorteilhafterweise besitzt die Klemmplatte einen winkeligen Querschnitt, wobei sich der erste Abschnitt im wesentlichen senkrecht zur Oberfläche und der zweite Abschnitt im wesentlichen parallel zur Oberfläche erstreckt. Ist die zugeordnete Flanke achsparallel, kann sich der zweite Abschnitt zweckmäßig in einen Hinterschnitt der Flanke erstrecken und an seinem Ende mit dem Kupplungsteil verbunden sein. In bevorzugter Ausgestaltung der Erfindung ist an der der achsparallelen Flanke gegenüberliegenden parallelen Flanke der Nut eine weitere, gleichartige Klemmplatte ausgebildet, sodaß beide Klemmplatten beispielsweise Teil eines bevorzugt U-förmigen Einsatzes in der Nut sein können, dessen Boden auf einer Erhebung des Nutengrundes verankert ist. Andererseits ist die Erfindung auch in der Weise realisierbar, daß an der der achsparallelen Seitenfläche gegenüberliegenden parallelen Seitenfläche eine weitere, gleichartige Klemmplatte ausgebildet ist, sodaß beide Klemmplatten beispielsweise Teil eines bevorzugt U-förmigen, am Zapfen seitlich befestigten Ansatzes sein können.

Um das Lösen der Kupplungsteile voneinander nach dem Spannen zu erleichtern, sieht die Erfindung zweckmäßig vor, daß die Flanke(n) und/oder die Seitenfläche(n) und/oder die Klemmplatte gehärtete Oberflächen haben. Ferner ist der Querschnitt des ersten Abschnittes zweckmäßig im wesentlich ein rechteckiger.

Die Erfindung wird nachstehend anhand der in der beigefügten Zeichnung dargestellten Ausführungsbeispiele im einzelnen beschrieben. Es zeigen:

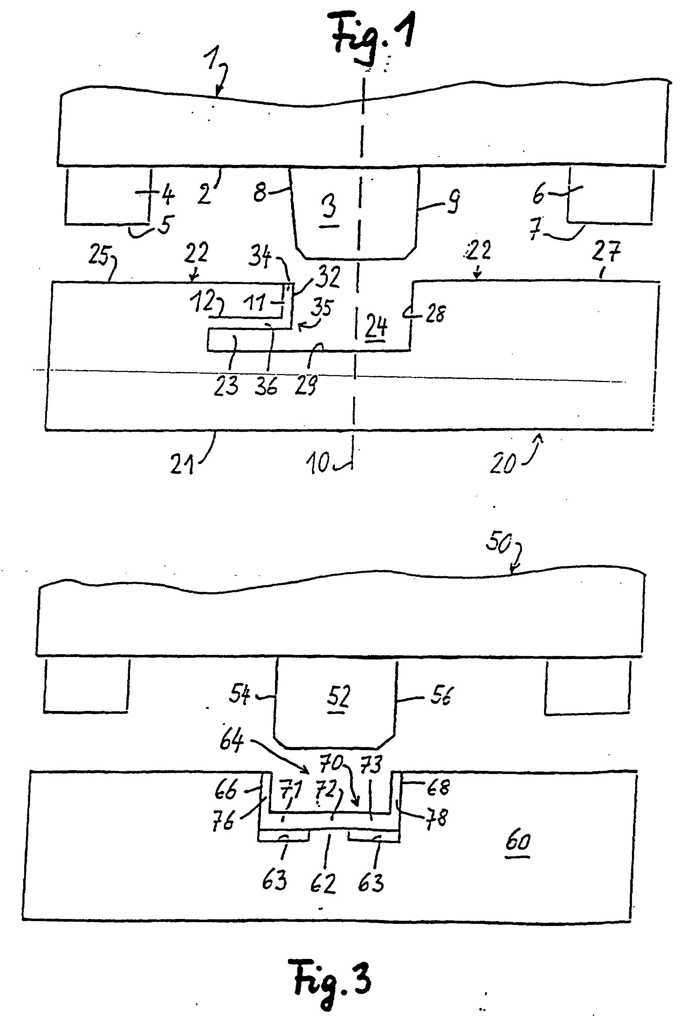

Figur 1 eine schematische Darstellung einer ersten Ausführungsform einer Kupplungsvorrichtung, bei der die Kupplungsteile noch voneinander gelöst sind;
Figur 2 eine schematische Darstellung der ersten Ausführungsform, bei der die Kupplungsteile sich im gespannten Zustand befinden;
Figur 3 eine schematische Darstellung einer zweiten Ausführungsform der Kupplungsvorrichtung;
Figur 4 eine schematische Darstellung einer dritten Ausführungsform der Erfindung,
Figur 5 eine schematische Darstellung einer vierten Ausführungsform der Erfindung und
Figur 6 eine schematische Darstellung einer fünften Ausführungsform der Erfindung.

Das erste Kupplungsteil 1, von dem nur sein hier interessierender vorderer Abschnitt dargestellt ist, kann an einem nicht gezeigten Spindelkopf beispielsweise einer Drehbank mittig befestigt sein. Von seiner freien Stirnfläche 2 stehen in der Regel drei in Umfangsrichtung gleich beabstandete Pfosten vor, von denen in der Zeichnung nur zwei Pfosten 4, 6 dargestellt sind. Die Stirnfläche 5, 7 jedes Pfostens 4, 6 ist plan geschliffen und stellt ein maschinenseitiges Referenzelement dar. Alle Stirnflächen 5, 7 liegen in einer gemeinsamen x-y-Ebene, die sich senkrecht zur gewöhnlich als z-Achse bezeichneten Drehachse 10 erstreckt. Alle Pfosten sind auf einem gedachten Kreis um die z-Achse angeordnet, sodaß in der Mitte des Kupplungsteils 1 eine nicht gezeigte axiale Durchgangsbohrung zum Durchgriff beispielsweise eines Zugankers, der Teil üblicher Spannmittel ist, vorgesehen sein kann.

Mittig zwischen je zwei in Umfangsrichtung benachbarten Pfosten stehen von der Strinfläche 2 je ein Zapfen 3 in z-Richtung etwas weiter vor als die Pfosten 4, 6. Der Zapfen 3 ist an einer Seite mit einer radiusparallelen prismatischen Referenzfläche 8 versehen, deren Oberfläche gehärtet ist. An jedem der beiden anderen, nicht dargestellten Zapfen ist an der in Umfangsrichtung gleichliegenden Seite eine gleichartige Referenzfläche ausgebildet.

Das zweite, bewegliche Kupplungsteil 20 ist dafür vorgesehen, an seiner Unterseite 21 ein von der Drehbank oder dergleichen Werkzeugmaschine, an der das erste Kupplungsteil 1 befestigt ist, zu bearbeitendes, nicht dargestelltes Werkstück zu tragen. Die dem ersten Kupplungsteil 1 zugewandte Oberseite 22 des zweiten Kupplungsteils 20 ist im wesentlichen eben und jedenfalls in denjenigen Bereichen 25, 27, die den Stirnflächen 5, 7 der Pfosten 4, 6 beim Spannen gegenüberliegen, plan geschliffen. Diese Bereiche 25, 27 wirken als Referenzgegenelemente mit den maschinenseitigen Referenzelementen 5, 7 zur Festlegung des zweiten Kupplungsteils 20 in z-Richtung relativ zum ersten Kupplungsteil 1 beim Spannen der beiden Kupplungsteile 1, 20 zusammen.

In das zweite Kupplungsteil 20 sind von der Oberseite 22 ausgehend eine der Anzahl der Zapfen 4, 6 gleiche Anzahl von in Umfangsrichtung gleich beabstandeten radiusparallelen Nuten eingeschnitten, von denen in die Zeichnung nur die dem Zapfen 3 beim Spannen gegenüberliegende Nut 24 eingezeichnet ist. Da die anderen Nuten genauso ausgebildet sind wie die Nut 24, wird nur letztere im einzelnen beschrieben. Die Nut 24 weist zwei gegenüberliegende radiusparallele Flanken auf, von denen die der Seitenfläche 9 des Zapfens 3 zugeordnete Flanke mit 28 bezeichnet ist, wobei die Seitenfläche 9 der Referenzfläche 8 am Zapfen 3 gegenüberliegt. Hinter der zur Flanke 28 parallelen und ihr gegenüberliegenden Begrenzungsfläche 32 der Nut 24 ist ein achsparalleler Einschnitt 11 beispielsweise mittels eines Erodierdrahtes in das Fleisch des Kupplungsteils 20 bis in eine Tiefe getrieben, die einem wesentlichen Teil der Nutentiefe entspricht, und unter etwa rechtem Winkel mit einem Schnitt 12 ungefähr parallel zur Oberfläche 22 weitergeführt. Ferner ist die Nut 24 gegenüber der Flanke 28 durch einen Hinterschnitt 23 unter der Begrenzungsfläche 32 etwa um die Länge des Schnittes 42 seitlich erweitert, wobei der Boden des Hinterschnittes eine Fortsetzung des Nutengrundes 29 ist. Dadurch entsteht vor der zur Flanke 28 parallelen Flanke 26 der Nut 24 eine mit dem Kupplungsteil 20 einteilige Klemmplatte 35, die ungefähr winkeligen Querschnitt hat. Die Klemmplatte weist somit einen oberen, sich etwa parallel zur z-Richtung erstreckenden Abschnitt 34 und einen anschließenden, sich etwa quer zur z-Richtung in den Hinterschnitt 23 erstreckenden Abschnitt 36 auf, der aufgrund seiner einendigen Verbindung mit dem Kupplungsteil 20 axialelastisch ist. Damit kann sich der Abschnitt 34 ebenfalls axialelastisch und parallel zur Flanke 26, das heißt in z-Richtung verschieben.

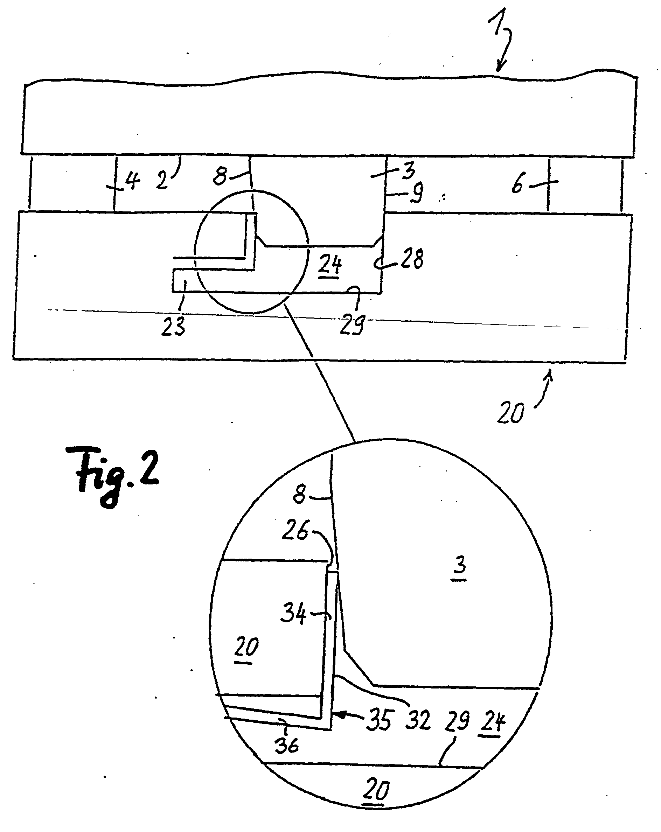

Werden die beiden Kupplungsteile 1, 20 durch die nicht gezeigten Spannmittel zusammengespannt, dringt zunächst der Zapfen 3 in die Nut 24 ein, bis die Referenzfläche 8 die obere freie Kante der Klemmplatte 35 kontaktiert. Dabei erfolgt eine Ausrichtung des zweiten Kupplungsteils 20 relativ zum ersten Kupplungsteil 1 in der x-y-Ebene. Bei weiterem Anziehen der Spannmittel dringt der Zapfen 3 weiter in die Nut 24 ein und nimmt die Klemmplatte 35 gemäß der Ausschnittsvergrößerung in Figur 2 unter axialelastischem Einwärtsbiegen des Klemmplattenabschnittes 36 in den Hinerschnitt 23 nach innen mit. Dabei tritt eine Klemmung des Zapfens 3 an der Flanke 26 durch die Klemmplatte 35 etwa in dem Augenblick ein, an welchem die Stirnflächen 5, 7 auf den Bereichen 25, 27 aufsitzen.

Die nach dem Spannen erreichte Einjustierung des Kupplungsteils 20 relativ zum Kupplungsteil 1 in der x-y-Ebene bleibt auch dann erhalten, wenn auf das Kupplungsteil 20 eine sehr hohe Kraft in beiden Umfangsrichtung einwirkt. Die Anlage der Seitenfläche 9 an der Flanke 28 nach dem Einjustieren ist ohnehin unnachgiebig, weil kein elastisches Glied zwischengeschaltet ist. Aber auch die Anlage der Referenzfläche 8 an der Klemmplatte 35 ist ebenfalls unnachgiebig, weil die Klemmplatte 35 nur in z-Richtung federt und in Umfangsrichtung nicht kompressibel ist.

Um das Lösen der gespannten Kupplungsteile und eine axiale Nachgiebigkeit der Klemmplatte 35 zu erleichtern sind die Begrenzungsfläche 32, die die der Flanke 28 zugewandte Oberfläche der Klemmplatte 35 ist, und die Flanke 26 gehärtet.

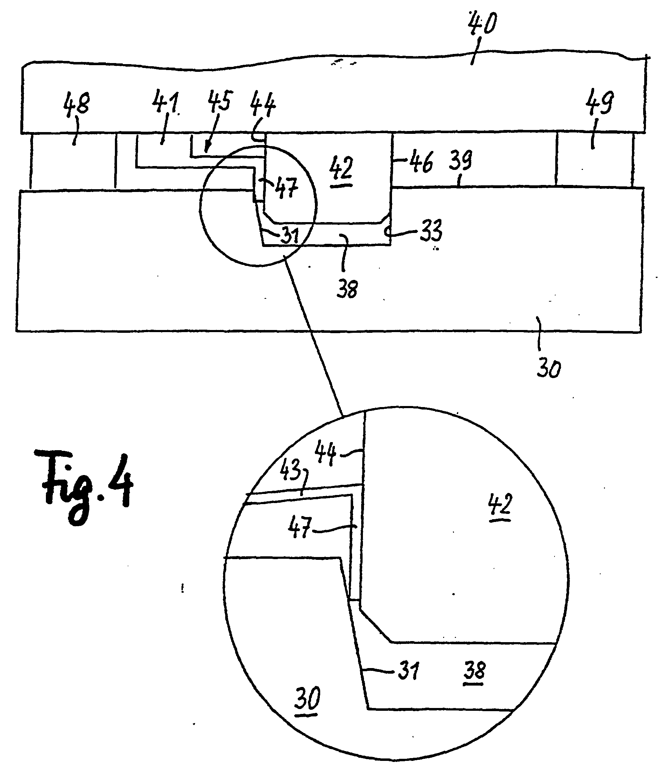

Das in Figur 3 dargestellte zweite Ausführungsbeispiel der Erfindung unterscheidet sich von der vorstehend erläuterten Ausführungsform in den Referenzelementen zur Festlegung des beweglichen Kupplungsteiles relativ zum maschinenfesten Kupplungsteil in z-Richtung nicht, sodaß insoweit auf die obigen Angaben Bezug genommen wird. Das maschinenfeste Kupplungsteil 50 weist wie das Kupplungsteil 1 mehrere Zapfen 52 auf, welche beidseitig mit radiusparallelen und prismatischen Referenzflächen 54, 56 versehen sind. In das bewegliche Kupplungsteil 60 sind in den Positionen der Zapfen 52 entsprechender Anordnung Nuten 64 eingeschnitten, deren Nutengrund 63 eine mittige Erhebung 62 aufweist. In die Nut 64 ist ein im Querschnitt U-förmiger Einsatz 70 eingesetzt, dessen Boden 72 auf der Erhebung 62 verankert ist. Die gegenüberliegenden Schenkel 76, 78 des Einsatzes 70 liegen an den gegenüberliegenden Flanken 66, 68 der Nut 64 an. Wie aus Figur 3 ersichtlich besitzt der Boden 72 Endabschnitte 71, 73, die frei über dem Nutengrund 63 schweben. Wenigstens der Boden 72 besteht aus einem elastischen Material, sodaß bei axialer Krafteinwirkung auf die Schenkel 76, 78 diese bis zum Aufsitzen der Endabschnitte 71, 73 auf dem Nutengrund 63 diese axialelastisch nachgeben können.

Damit wirkt sowohl der Schenkel 76 mit Endabschnitt 71 wie auch der Schenkel 78 mit Endabschnitt 73 jeweils als eine Klemmplatte im Sinne des ersten Ausführungsbeispiels der Erfindung, wobei vorliegend beide Klemmplatten über den Boden 72 miteinander und mit dem Kupplungsteil 60 verbunden sind. Zur Wirkungsweise kann daher auf die obige Erläuterung Bezug genommen werden.

Das dritte Ausführungsbeispiel der Erfindung gemäß Figur 4 unterscheidet sich von dem Vorhergehenden im wesentlichen dadurch, daß die Klemmplatte 45 an dem ersten Kupplungsteil 40 befestigt ist, welches Zapfen 42 mit gegenüberliegenden achsparallelen Seitenflächen 44, 46 trägt. Die Klemmplatte 45 kann aus dem Korpus des Kupplungsteils 40 etwa durch Drahterosion herausgeschnitten oder durch Schrauben auswechselbar mit dem Kupplungsteil 40 verbunden werden. Die Klemmplatte 45 besteht aus einem mit dem Kupplungsteil 40 verbundenen Block 41 und einem sich von diesem ausgehend in Richtung auf die Seitenfläche 44 sich erstreckenden, axialelastischen zweiten Abschnitt 43, welcher sich in einen ersten, an der Seitenfläche vertikal beweglich anliegenden Abschnitt 47 mit im wesentlichen rechteckigem Querschnitt fortsetzt.

Die der Seitenfläche 44 zugeordnete Flanke 31 der zugehörigen Nut 38 im zweiten Kupplungsteil 30 ist nach außen und oben geneigt, sodaß sie mit der Seitenfläche 44 beim Zusammenspannen einen kleinen Winkel bildet. Die gegenüberliegende Flanke 33 der Nut 38 ist achsparallel und bildet ebenso wie die Seitenfläche 46 je eine Referenzfläche für die Positionierung der Kupplungsteile 30, 40 zueinander in der x-y-Ebene.

Beim Zusammenspannen der beiden Kupplungsteile 30, 40 dringt der Zapfen 42 in die zugehörige Nut 38 ein, bis die untere, äußere Kante des ersten Abschnittes 47 die Flanke 31 kontaktiert. Bei weiterem Eindringen verklemmt sich der erste Absschnitt 47 zwischen Flanke 31 und Seitenfläche 44, sodaß die Seitenfläche 46 gegen die Flanke 33 gepreßt wird. Weiteres Eindringen des Zapfens 42 führt zu einer Relativbewegung zwischen Seitenfläche 44 und Abschnitt 47, was durch die Axialelastizität des zweiten Abschnittes 43 ermöglicht wird. Das Eindringen findet sein Ende bei Erreichen der exakten z-Position der beiden Kupplungsteile 30, 40 zueinander (Aufsitzen der vom Kupplunsteil 40 vorstehenden Pfosten 48, 49 auf der Oberfläche 39 des Kupplungsteils 30).

Bei der dritten Ausführungsform der Erfindung ist der Zapfen 82 des ersten Kupplungsteils 80 von einem Ansatz 85 umgeben, der beispielsweise an der mit einem Kreuz markierten Stelle an einer die beiden achsparallelen Seitenflächen 92, 96 verbindenden seitlichen Stirnfläche 84 des Zapfens befestigt sein kann. Von diesem Ansatz erstrecken sich der erste Abschnitt 81 einer ersten Klemmplatte 86 längs der Seitenfläche 92 und der erste Abschnitt 87 einer weiteren Klemmplatte 88 längs der Seitenfläche 96 jeweils vertikal beweglich in Richtung auf deren freies Ende vom Kupplungsteil 80 weg. Die dem Zapfen 82 zugeordnete Nut 94 besitzt zwei gegenüberliegende Flanken 91, 93, von denen die Flanke 91 der Seitenfläche 92 und die Flanke 93 der Seitenfläche 96 zugeordnet sind. Jede der beiden Flanken 91, 93 ist nach oben und außen schwach geneigt, sodaß sie mit den zugehörigen Seitenflächen 92, 96 einen kleinen Winkel bilden.

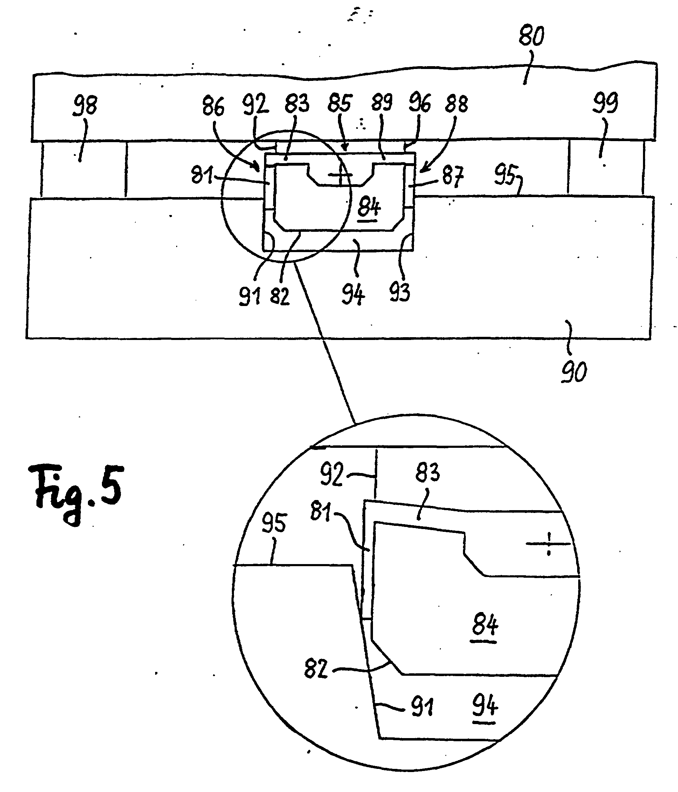

Beim Zusammenspannen dringt der Zapfen 82 in die Nut 94 ein, sodaß die äußere untere Kante des Abschnittes 81 die Flanke 91 und die äußere untere Kante des Abschnittes 87 die Flanke 93 kontaktieren. Der Zapfen 82 wird daurch bezüglich der Nut 94 mittig ausgerichtet. Wie dargestellt verklemmen sich die Abschnitte 81, 87 an den Flanken 91, 93 und können bei weiterem Eindringendes Zapfens 82 sich relativ zu diesem verschieben, und zwar aufgrund der axialen Elastizität der zweiten Abschnitte 83, 89 der Klemmplatten 86, 88, was für die Klemmplatte 86 in dem in Figur 5 wiedergegebenen vergrößerten Ausschnitt zeichnerisch dargestellt ist. Das Eindringen des Zapfens 82 findet wieder sein Ende, wenn die vom Kupplungsteil 80 vorstehenden Pfosten 98, 99 auf der Oberfläche 95 des Kupplungsteils 90 aufsitzen und damit die z-Positionierung erreicht ist.

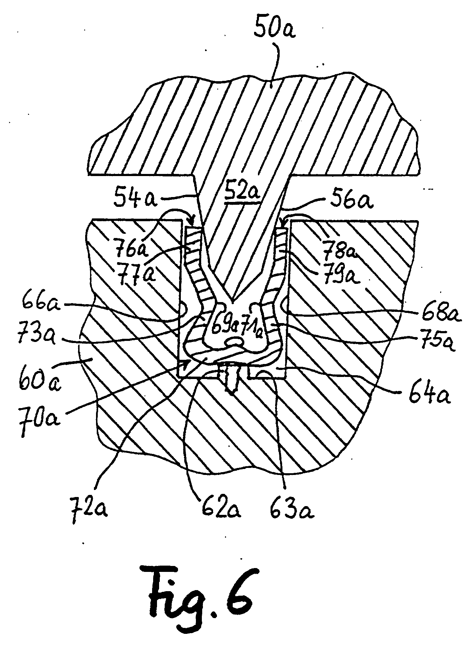

Die fünfte Ausführungsform der Erfindung gemäß Figur 6 stellt sich insbesondere insofern als eine weitere Ausbildung der zweiten Ausführungsform gemäß Figur 3 dar, als der dortige Einsatz 70 hier eine andere Form und Eigenschaft hat. Es wird wieder nur die Nut 64a mit Einsatz 70a beschrieben, die weiteren Nuten sind gleich ausgeführt. Aus dem Nutengrund 63a erhebt sich mittig ein Ansatz 62a, auf welchem der Einsatz 70a befestigt ist. Die gegenüberliegenden Nutflanken 66a und 68a verlaufen achsparallel.

Der Einsatz 70a weist zwei gegenüberliegende Schenkel 76a und 78a auf, von denen jeweils nur der obere Abschnitt 77a bzw. 79a, der in der Nähe der Oberfläche des beweglichen Kupplungsteils 60a endet, an der benachbarten Nutenflanke 66a bzw. 68a anliegt oder fast anliegt. Der innere Abschnitt 73a bzw. 75a der Schenkel 76a und 78a, der den oberen Abschnitt 77a bzw. 79a mit dem Boden 72a des Einsatzes 70a verbindet, ist in Richtung auf den jeweils gegenüberliegenden Schenkel 78a bzw. 76a bei 69a, 71a eingeknickt. Wenigstens der innere Abschnitt 73a bzw. 75a ist aus Federstahl gefertigt, jedenfalls axial nachgiebig.

Jeder von der Unterseite des anderen Kupplungsteils 50a vorstehende Zapfen (nur der der Nut 64a zugeordnete Zapfen 52a ist dargestellt) weist zwei gegenüberliegende radiusparallele und prismatische Flächen 54a und 56a auf.

Dringt der Zapfen 52a beim Spannen der Kupplungsteile in die Nut 64a ein, kontaktieren die prismatischen Seitenflächen 54a, 56a die jeweils obere innere Kante des jeweiligen oberen Abschnittes 76a, 78a und richtet damit die Nut 64a (und damit das Kupplungsteil 60a) auf das Kupplungsteil 50a aus. Beim weiteren Spannen schiebt der Zapfen 52a die oberen Abschnitte 76a, 78a, die jetzt an den Flanken 66a, 68a anliegen, in die Nut 64a hinein, bis die erwähnten Pfosten des Kupplungsteils 50a auf der Oberfläche des Kupplungsteils 60a aufsitzen und damit die z-Position des Kupplungsteils 60a erreicht ist. Gleichzeitig knicken die inneren Abschnitte 73a und 75a bei 69a und 71 a elastisch ein.Der Zapfen 52a bleibt hierbei zwischen den Schenkeln 76a und 78a eingeklemmt.

## Patentansprüche

1. Kupplungsvorrichtung mit zwei Kupplungsteilen (1, 20; 30, 40; 50, 60; 80, 90) und Spannmitteln zum lösbaren axialen Zusammenspannen der beiden Kupplungsteile, wobei an beiden Kupplungsorganen Mittel (z-Referenzen 5, 25; 7, 27) vorgesehen sind, die den axialen Abstand beider Kupplungsorgane voneinander beim Zusammenspannen definieren, und wobei als Referenz in einer zur Spannrichtung senkrechten Ebene in die Oberfläche (22, 39, 95) eines der beiden Kupplungsteile (20, 30, 90, 60) mehrere in Umfangsrichtung beabstandete nichtparallele Nuten (24, 64, 38, 94) eingebracht sind und aus der Oberfläche (2) des anderen Kupplungsteils (1, 40, 50, 80) mehrere Zapfen (3, 42, 52, 82) in den Nuten entsprechender Anordnung vorstehen, wobei wenigstens eine der Seitenflächen (8, 44, 54, 56, 92, 96) jedes Zapfens mit der zugeordneten Flanke (26, 31, 66, 68, 91, 93) jeder Nut bei axialer Ausrichtung der Kupplungsteile einen Winkel bildet, **dadurch gekennzeichnet, daß** beim Zusammenspannen zwischen der Seitenfläche und der zugeordneten Flanke ein freies Ende einer mit einem der Kupplungsteile axialelastisch verbundenen Klemmplatte (35, 45, 71, 76, 73, 78, 86, 88) angeordnet ist.

2. Vorrichtung nach Anspruch 1, **dadurch gekennzeichnet, daß** die Klemmplatte mit dem Kupplungsteil fest verbunden und insbesondere einteilig mit diesem ist.

3. Vorrichtung nach Anspruch 1 oder 2, **dadurch gekennzeichnet, daß** die Klemmplatte mit dem Kupplungsteil auswechselbar verbunden ist.

4. Vorrichtung nach einem der vorstehenden Ansprüche, **dadurch gekennzeichnet, daß** an jeder Nut wenigstens eine Klemmplatte vorgesehen ist

5. Vorrichtung nach einem der vorstehenden Ansprüche, **dadurch gekennzeichnet, daß** die Klemmplatte einen ersten, an der achsparallelen Seitenfläche beweglich anliegenden Abschnitt (47, 81, 87) sowie einen zweiten mit dem Kupplungsteil verbundenen axialelastischen Abschnitt (43, 83, 89) aufweist.

6. Vorrichtung nach einem der Ansprüche 1 bis4, **dadurch gekennzeichnet, daß** die Klemmplatte einen ersten, an der achsparallelen Flanke beweglich anliegenden Abschnitt (34, 76, 78) sowie einen zweiten mit dem Kupplungsteil verbundenen axialelastischen Abschnitt (36, 71, 73) aufweist.

7. Vorrichtung nach einem der Ansprüche 5 oder 6, **dadurch gekennzeichnet, daß** die Klemmplatte wenigstens an ihrem ersten Abschnitt (34, 47, 76, 78, 81, 87) einen rechteckigen Querschnitt aufweist.

8. Vorrichtung nach einem der vorstehenden Ansprüche **dadurch gekennzeichnet, daß** sich der erste Abschnitt im wesentlichen senkrecht und der zweite Abschnitt im wesentlichen parallel zur Oberfläche (22) des Kupplungsteils (20, 60) erstreckt.

9. Vorrichtung nach einem der Ansprüche 6 bis 8, **dadurch gekennzeichnet, daß** der zweite Abschnitt (36) an seinem Ende mit dem Kupplungsteil verbunden ist.

10. Vorrichtung nach einem der Ansprüche 7 bis 9, **dadurch gekennzeichnet, daß** sich der zweite Abschnitt (36) in einen Hinterschnitt (23) der Flanke (26) erstreckt.

11. Vorrichtung nach einem der vorstehenden Ansprüche, **dadurch gekennzeichnet, daß** an der der Flanke (66) gegenüberliegenden Flanke (68) der Nut (64) eine weitere gleichartige Klemmplatte (78, 73) ausgebildet ist.

12. Vorrichtung nach Anspruch 10, **dadurch gekennzeichnet, daß** die Klemmplatte (76, 71) und die weitere Klemmplatte (78, 73) Teile eines Einsatzes (70) in der Nut (64) sind, dessen Boden (72) auf einer Erhebung (62) des Nutengrundes (63) verankert ist.

13. Vorrichtung nach Anspruch 11, **dadurch gekennzeichnet, daß** der Einsatz (70) im wesentlichen U-förmigen Querschnitt hat.

14. Vorrichtung nach einem der vorstehenden Ansprüche, **dadurch gekennzeichnet, daß** die Flanken (26, 66, 68) und/oder die Prismenflächen und/oder die Klemmplatte (35; 76, 71; 78, 73) gehärtet sind.

15. Vorrichtung nach einem der vorstehenden Ansprüche, **dadurch gekennzeichnet, daß** an den Kupplungsteilen (1, 20; 30, 40, 50, 60, 80, 90) Referenzelemente (5, 25; 7, 27, 48, 49, 98, 99) vorgesehen sind, die beim Zusammenspannen eine axiale z-Referenz bilden.

16. Vorrichtung nach einem der Ansprüche 1 bis 9, **dadurch gekennzeichnet, daß** an der der achsparallelen Seitenfläche gegenüberliegenden parallelen Seitenfläche eine zweite, gleichartige Klemmplatte (88) ausgebildet ist.

17. Vorrichtung nach Anspruch 15, **dadurch gekennzeichnet, daß** die Klemmplatte (86) und die zweite Klemmplatte (88) an einem den Zapfen (82) umgebenden und an ihm befestigten ringförmigen Ansatz (85) ausgebildet sind.

18. Vorrichtung nach einem der vorstehenden Ansprüche, **dadurch gekennzeichnet, dass** die Klemmplatte einen ersten, an der achsparallelen Seitenfläche beweglich anliegenden Schenkel (76a, 78a) sowie einen abgebogenen, mit dem Kupplungsteil verbundenen Boden (72a) aufweist, wobei der Schenkel in Bodennähe axial federnd eingeknickt ist (bei 69a, 71a).

## Claims

1. Coupling device having two coupling members (1, 20; 30, 40; 50, 60; 80, 90) and clamping means for releasable axial clamping together of the two coupling members, whereby means (z-references 5, 25; 7, 27) are provided on the two coupling organs that define the axial separation of the two coupling organs from each other on clamping together, and whereby a plurality of non-parallel grooves (24, 64, 38, 94) spaced in the circumferential direction are set into the surface (22, 39, 95) of one of the two coupling members (20, 30, 90, 60) as a reference in a plane perpendicular to the clamping direction and a plurality of pegs (3, 42, 52, 82) arranged in accordance with the grooves project from the surface (2) of the other coupling member (1, 40, 50, 80) whereby, on axial orientation of the coupling members, at least one of the side surfaces (8, 44, 54, 56, 92, 96) of each peg encloses an angle with the associated flank (26, 31, 66, 68, 91, 93) of each groove, **characterised in that** on clamping together, between the side face and the associated flank is arranged a free end of a clamping plate (35, 45, 71, 76, 73, 78, 86, 88) linked in axially elastic manner to one of the coupling members.

2. Device according to Claim 1, **characterised in that** the clamping plate is firmly attached to the coupling member and, in particular, is made in one piece with it.

3. Device according to Claim 1 or 2, **characterised in that** the clamping plate is interchangeably linked to the coupling member.

4. Device according to one of the previous claims, **characterised in that** at least one clamping plate is provided at every groove.

5. Device according to one of the previous claims, **characterised in that** the clamping plate has a first section (47, 81, 87) lying moveably against the axially parallel side face and a second axially elastic section (43, 83, 89) linked to the coupling member.

6. Device according to one of the claims 1 to 4, **characterised in that** the clamping plate has a first section (34, 76, 78) lying moveably against the axially parallel flank and a second axially elastic section (36, 71, 73) linked to the coupling member.

7. Device according to one of the claims 5 or 6, **characterised in that** the clamping plate has a rectangular cross-section, at least on its first section (34, 47, 76, 78, 81, 87).

8. Device according to one of the previous claims, **characterised in that** the first section extends substantially perpendicular and the second section substantially parallel to the surface (22) of the coupling member (20, 60).

9. Device according to one of the claims 6 to 8, **characterised in that** the second section (36) is linked at its end to the coupling member.

10. Device according to one of the claims 7 to 9, **characterised in that** the second section (36) extends into an undercut (23) of the flank (26).

11. Device according to one of the previous claims, **characterised in that** on the flank (68) of the groove (64) lying opposite the flank (66), a further similar clamping plate (78, 73) is formed.

12. Device according to Claim 10, **characterised in that** the clamping plate (76, 71) and the further clamping plate (78, 73) are parts of an insert (70) in the groove (64), whose base (72) is anchored on an elevation (62) of the groove base (63).

13. Device according to Claim 11, **characterised in that** the insert (70) has a substantially U-shaped cross-section.

14. Device according to one of the previous claims, **characterised in that** the flanks (26, 66, 68) and/or the prism surfaces and/or the clamping plate (35; 76, 71; 78, 73) are hardened.

15. Device according to one of the previous claims, **characterised in that** reference elements (5, 25; 7, 27, 48, 49, 98, 99) are provided on the coupling members (1, 20; 30, 40, 50, 60, 80, 90), which form an axial z-reference on clamping together.

16. Device according to one of the claims 1 to 9, **characterised in that** on the parallel side face opposing the axially parallel side face, a second similar clamping plate (88) is formed.

17. Device according to Claim 15, **characterised in that** the clamping plate (86) and the second clamping plate (88) are formed on an annular shoulder (85) surrounding the peg (82) and attached to it.

18. Device according to one of the previous claims, **characterised in that** the clamping plate has a first leg (76a, 78a) lying moveably against the axially parallel side face and a bent down base (72a) linked to the coupling member, whereby the leg is bent inwards (at 69a, 71a) close to the base in axially elastic manner.

## Revendications

1. Dispositif d'accouplement comportant deux éléments d'accouplement (1, 20 ; 30, 40 ; 50, 60 ; 80, 90), et des moyens de serrage pour le serrage axial amovible des deux éléments d'accouplement, des moyens (références z 5, 25 ; 7, 27) étant prévus sur les deux organes d'accouplement, lesquels définissent l'écartement axial entre les deux organes d'accouplement lors du serrage, plusieurs encoches non parallèles (24, 64, 38, 94) espacées dans la direction périphérique étant pratiquées en tant que référence dans un plan perpendiculaire au sens de serrage dans la surface (22, 39, 95) de l'un des deux éléments d'accouplement (20, 30, 90, 60), et plusieurs tenons (3, 42, 52, 82) dépassant de la surface (2) de l'autre élément d'accouplement (1, 40, 50, 80) étant prévus dans une disposition correspondant à celle des encoches, l'une au moins des surfaces latérales (8, 44, 54, 56, 92, 96) de chaque tenon formant un angle avec le flanc associé (26, 31, 66, 68, 91, 93) de chaque encoche lorsque les éléments d'accouplement sont orientés axialement, **caractérisé en ce que**, lors du serrage, une extrémité libre d'une plaque de serrage (35, 45, 71, 76, 73, 78, 86, 88) reliée axialement de façon élastique à l'un des éléments d'accouplement est agencée entre la surface latérale et le flanc associé.

2. Dispositif selon la revendication 1, **caractérisé en ce que** la plaque de serrage est reliée solidairement à l'élément d'accouplement, et est notamment réalisée d'un seul tenant avec celui-ci.

3. Dispositif selon la revendication 1 ou 2, **caractérisé en ce que** la plaque de serrage est reliée de façon interchangeable à l'élément d'accouplement.

4. Dispositif selon l'une quelconque des revendications précédentes, **caractérisé en ce qu'**au moins une plaque de serrage est prévue au niveau de chaque encoche.

5. Dispositif selon l'une quelconque des revendications précédentes, **caractérisé en ce que** la plaque de serrage comporte un premier tronçon (47, 81, 87), qui s'applique de façon mobile contre la surface latérale parallèle à l'axe, ainsi qu'un deuxième tronçon (43, 83, 89) axialement élastique relié à l'élément d'accouplement.

6. Dispositif selon l'une quelconque des revendications 1 à 4, **caractérisé en ce que** la plaque de serrage comporte un premier tronçon (34, 76, 78), qui s'applique de façon mobile contre le flanc parallèle à l'axe, ainsi qu'un deuxième tronçon (36, 71, 73) axialement élastique relié à l'élément d'accouplement.

7. Dispositif selon l'une des revendications 5 ou 6, **caractérisé en ce que** la section transversale de la plaque de serrage est rectangulaire, au moins au niveau de son premier tronçon (34, 47, 76, 78, 81, 87).

8. Dispositif selon l'une quelconque des revendications précédentes, **caractérisé en ce que** le premier tronçon s'étend pour l'essentiel perpendiculairement, et **en ce que** le deuxième tronçon s'étend pour l'essentiel parallèlement, à la surface (22) de l'élément d'accouplement (20, 60).

9. Dispositif selon l'une quelconque des revendications 6 à 8, **caractérisé en ce que** le deuxième tronçon (36) est relié par son extrémité à l'élément d'accouplement.

10. Dispositif selon l'une quelconque des revendications 7 à 9, **caractérisé en ce que** le deuxième tronçon (36) s'étend dans une contre-dépouille (23) du flanc (26).

11. Dispositif selon l'une quelconque des revendications précédentes, **caractérisé en ce qu'**une autre plaque de serrage (78, 73) de même type est agencée sur le flanc (68) de l'encoche (64) opposé au flanc (66).

12. Dispositif selon la revendication 10, **caractérisé en ce que** la plaque de serrage (76, 71) et l'autre plaque de serrage (78, 73) sont des parties d'un insert (70) de l'encoche (64), dont le fond (72) est ancré sur une surélévation (62) du fond (63) de l'encoche.

13. Dispositif selon la revendication 11, **caractérisé en ce que** la section transversale de l'insert (70) a sensiblement une forme de U.

14. Dispositif selon l'une quelconque des revendications précédentes, **caractérisé en ce que** les flancs (26, 66, 68) et/ou les surfaces prismatiques et/ou la plaque de serrage (35 ; 76, 71 ; 78, 73) sont trempés.

15. Dispositif selon l'une quelconque des revendications précédentes, **caractérisé en ce que** des éléments de référence (5, 25 ; 7, 27, 48, 49, 98, 99) sont prévus sur les éléments d'accouplement (1, 20 ; 30, 40, 50, 60, 80, 90), qui constituent une référence axiale z lors du serrage.

16. Dispositif selon l'une quelconque des revendications 1 à 9, **caractérisé en ce qu'**une deuxième plaque de serrage (88) de même type est agencée sur la surface latérale parallèle opposée à la surface latérale parallèle à l'axe.

17. Dispositif selon la revendication 15, **caractérisé en ce que** la plaque de serrage (86) et la deuxième plaque de serrage (88) sont agencées sur un épaulement annulaire (85) entourant le tenon (82), et fixées sur ce dernier.

18. Dispositif selon l'une quelconque des revendications précédentes, **caractérisé en ce que** la plaque de serrage comporte une première branche (76a, 78a) qui s'applique de façon mobile contre la surface latérale parallèle à l'axe, ainsi qu'un fond (72a) recourbé qui est relié à l'élément d'accouplement, la branche étant infléchie de façon axialement élastique à proximité du fond (69a, 71a).
